# EUROPEAN PATENT SPECIFICATION

(11) **EP 3 839 448 B1**
(45) Date of publication and mention of the grant of the patent: **02.07.2025**
(21) Application number: 19219004.9
(22) Date of filing: 20.12.2019
(51) Int. Cl.: G01G 21/22, G01G 21/28

(54) **WEIGHING DEVICE**
WIEGEVORRICHTUNG
DISPOSITIF DE PESAGE

(43) Date of publication of application: 23.06.2021
(73) Proprietor: New Direction Tackle Ltd., Eastleigh SO50 7DD (GB)
(72) Inventor: Ferger, Benjamin, 35684 Dillenburg (DE)
(74) Representative: Forresters IP LLP

(56) References cited:
- EP-A1- 3 677 883
- CN-U- 206 440 372
- DE-A1- 102010 016 968
- GB-A- 2 522 193
- US-B2- 9 476 756
- US-B2- 9 476 758

## Description

The present invention relates to a device for weighing fish, in particular a device for weighing fish comprising: a frame; a support; a plurality of weight sensors; and a receiving unit. The present invention also relates to a system comprising: a device for weighing fish; a mobile device or computer; and, optionally, a camera.

Fish care, to avoid damaging the scales of caught fish, is an important part of responsible fishing. Fish cradles, devices comprising a frame and a support attachable to the frame, or unhooking mats are commonly used by anglers to support living fish after they have been caught. After an angler lands a catch, the angler will place the caught fish on the support of a fish cradle or on an unhooking mat. While the caught fish is supported by the fish cradle or unhooking mat, the angler is able to unhook the fish from a fishing hook and treat any wounds caused by the fishing hook to the fish.

Generally, an unhooking mat or the support of a fish cradle is padded, to provide protection to the living fish. Additionally, an unhooking mat or the support of a fish cradle is typically made of a "fish-friendly" material chosen to avoid damaging the delicate scales of the caught fish. The support of a fish cradle often further comprises a number of apertures for water drainage. The apertures allow the angler to regularly/ continuously wet the caught fish so that the mucus membrane of the fish is not damaged by an extended period of time out of the water.

After catching a fish and carrying out the necessary fish care, an angler will generally weigh the fish and make a record of its mass. Typically, weighing a caught fish involves transferring the living fish from a fish cradle or unhooking mat to a weigh sling. The angler will then use a weighing device, such as a hanging scale, to measure the mass of the caught fish in the weigh sling. Devices for weighing fish while providing adequate support are disclosed in the patent documents GB2522193 and EP3677883 A1.

It can be appreciated that the risk of damaging the scales of a caught fish during transfer from a fish cradle or unhooking mat to a weigh sling is high. Fish cradles, unhooking mats and weigh slings all provide adequate support to a caught fish. When a fish is well-supported, the fish is less likely to thrash and damage its scales. During transfer between a fish cradle or unhooking mat and a weigh sling, a caught fish is not adequately supported and therefore likely to thrash and injure itself.

The present invention aims to remove the need to transfer a caught fish from a fish cradle to a weigh sling, to weigh the fish. The present invention encompasses a device for weighing fish comprising a fish cradle (frame and support). The angler is both able to weigh a caught fish, and support a caught fish for unhooking and treatment, with the device of the present invention.

It can be appreciated that, as well as minimising the likelihood of damage to the scales of a caught fish, the device of the present invention also reduces the amount of time a caught fish is held out of the water for treatment and weighing: the step of transferring a caught fish to a weigh sling requires time. The present invention therefore reduced the likelihood of damage to the mucus membrane of the caught fish.

As described above, anglers typically make a record of the mass of each fish that they catch. Often, anglers will also make a photographic record of each fish that they catch. Anglers may also record the "run" for each of their catches, if using a fishing line and fish bite detector setup. In fishing terminology, a "run" refers to: the line taken by the biting fish; the alarm a fish bite detector makes upon detecting a fish bite; and the behaviour of the tackle in response to a fish bite, e.g. how the fishing line moves.

The present invention also encompasses a system comprising both a device for weighing fish and a mobile device or computer. The system of the present invention may be used by an angler to record the masses of the fish that they have caught. In arrangements of the system comprising a camera, or in arrangements of the system comprising a mobile device having a camera, the angler may additionally produce a photographic record of their catches and/or a video record of their "runs".

In addition, the system of the present invention may be used by an angler to share data (e.g. fish masses, fish photos, run videos, location information) from their fishing trips with fellow anglers.

According to the present invention there is also provided a device for weighing fish comprising:
a frame comprising a plurality of feet;
a support for supporting a fish to be weighed, wherein the support is attachable to the frame;
a plurality of weight sensors, wherein the number of weight sensors is equal to the number of frame feet, and wherein each weight sensor is integrally attached to, or comprises a means for attachment to, one of the plurality of feet; and
a receiving unit comprising a data processing unit and a display, wherein the receiving unit is capable of data communication with the plurality of weight sensors,
wherein each weight sensor is configured to transmit mass data to the receiving unit, wherein the data processing unit is programmed to determine a mass from the mass data received from the plurality of weight sensors, and wherein the display is configured to display the mass determined by the data processing unit.

Preferably, the receiving unit is integrally attached to the frame, wherein the receiving unit is connectable to the plurality of weight sensors via a plurality of electrical cables, and wherein the device further comprises said plurality of electrical cables.

Advantageously, the receiving unit is integrally attached to the frame or is portable, wherein each weight sensor and the receiving unit both comprise a wireless transceiver, and wherein each weight sensor transmits data wirelessly to the receiving unit.

Conveniently, the receiving unit comprises at least one actuator manipulable by the user, wherein the at least one actuator comprises a tare button.

Advantageously, the at least one actuator is manipulable to set or change the unit of mass in which the mass determined by the data processing unit is displayed.

Preferably, each weight sensor comprises at least one LED to indicate the working status of the weight sensor, and/or the receiving unit comprises at least one LED to indicate the working status of the receiving unit.

Conveniently, the device comprises four feet and four weight sensors.

Advantageously, the support comprises a cover portion for covering a fish to be weighed, or the device further comprises a cover attachable to the frame for covering a fish to be weighed.

According to the present invention there is also provided a kit comprising:
a plurality of weight sensors, wherein each weight sensor comprises a means for attachment to a foot of a fish cradle, and wherein each weight sensor comprises a wireless transceiver; and
a receiving unit comprising a data processing unit, a display and a wireless transceiver, wherein the receiving unit is capable of data communication with the plurality of weight sensors,
wherein each weight sensor is configured to transmit mass data to the receiving unit, wherein the data processing unit is programmed to determine a mass from the mass data received from the plurality of weight sensors, and wherein the display is configured to display the mass determined by the data processing unit.

According to the present invention there is additionally provided a system comprising:
the device for weighing fish; and
a mobile device or a computer,
wherein the receiving unit is capable of data communication with the mobile device or computer, wherein the receiving unit is configured to transmit each mass value determined by the data processing unit to the mobile device or computer,
wherein the mobile device or computer has or is programmed with instructions to save each mass value transmitted by the receiving unit to a data storage unit of the mobile device or computer, and
wherein the mobile device or computer has or is programmed with instructions to retrieve one or more saved mass values from the data storage unit of the mobile device or computer and display the one or more saved mass values on a display of the mobile device or computer upon input of a retrieval command by the user.

According to the present invention there is further provided a system comprising:
a device for weighing fish; and
a mobile device or a computer,
wherein the device for weighing fish is capable of wireless data communication with the mobile device or computer, wherein the device for weighing fish is configured to transmit to the mobile device or computer,

wherein the mobile device or computer has or is programmed with instructions to save each mass value transmitted by the device for weighing fish to a data storage unit of the mobile device or computer, and
wherein the mobile device or computer has or is programmed with instructions to retrieve one or more saved mass values from the data storage unit of the mobile device or computer and display the one or more saved mass values on a display of the mobile device or computer upon input of a retrieval command by the user.

Advantageously, the system further comprises:
a camera capable of data communication with the mobile device or computer, wherein the camera is configured to transmit photos or videos to the mobile device or computer,
wherein the mobile device or computer has or is programmed with instructions to save photos and videos transmitted by the camera to a data storage unit of the mobile device or computer,
wherein the mobile device or computer has or is programmed with instructions to pair a saved photo and/or video with a saved mass value upon input of a pairing command by the user, and
wherein the mobile device or computer has or is programmed with instructions to retrieve one or more saved mass values and paired photos and/or videos from the data storage unit of the mobile device or computer and display the one or more saved mass values on a display of the mobile device or computer upon input of a retrieval command by the user.

Preferably, the system comprises a mobile device, wherein the mobile device comprises a camera,
wherein the mobile device has or is programmed with instructions to pair a photo and/or video saved to a data storage unit of the mobile device with a saved mass value upon input of a pairing command by the user, and
wherein the mobile device has or is programmed with instructions to retrieve one or more saved mass values and paired photos and/or videos from the data storage unit of the mobile device and display the one or more saved mass values and paired photos and/or videos on a display of the mobile device upon input of a retrieval command by the user.

The invention will now be described with reference to the attached drawings, in which:
FIGURE 1 is a perspective view of a device for weighing fish according to the invention; and
FIGURE 2 depicts a system according to the invention.

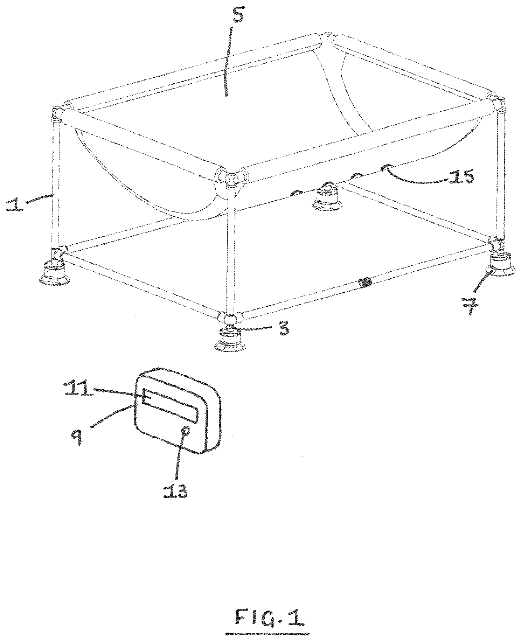

Figure 1 depicts generally a device for weighing fish according to the present invention. The device comprises a frame 1, a support 5 attachable to the frame, a plurality of weight sensors 7, and a receiving unit 9.

As depicted in figure 1, the frame 1 comprises a plurality of feet 3. In a preferred arrangement of the invention, the frame 1 comprises four feet 3. In alternative preferred arrangements of the invention, the frame 1 comprises three feet 3 or more than four feet. It can be appreciated that the frame 1 my take a variety of shapes having various numbers of feet 3.

The device comprises the same number of weight sensors 7 as feet 3. Each weight sensor 7 is either integrally attached to, or comprises a means for attachment to, one of the plurality of feet 3. For example, each weight sensor 7 may comprise a recess shaped and configured to receive one of the plurality of feet 3. It can be appreciated that other means for attachment of the weight sensors 7 to the feet 3 are envisaged.

The receiving unit 9 comprises a data processing unit and a display 11. The receiving unit 9 is capable of data communication with the plurality of weight sensors 7.

As depicted in figure 1, the support 5, when attached to the frame 1, forms a hammock on which a fish may be placed for weighing: the support 5 supports the fish to be weighed. In preferred arrangements of the invention, the support 5 is padded, to provide adequate support for the fish to be weighed.

In figure 1, the support 5 is depicted as attached to the frame 1 at four points, i.e. four corners of the frame 1. It can be appreciated that the support 5 may be attached to the depicted frame 1 at fewer than four points, e.g. at just two sides of the frame 1, and at more than four points, e.g. at multiple points along each side of the frame. It can also be appreciated that the shape of the support 5, and the number of attachment points to the frame 1, will vary with the shape of the frame.

Each weight sensor 7 is configured to transmit mass data to the receiving unit 9. The data processing unit of the receiving unit 9 is programmed to determine a mass from the data received from the plurality of weight sensors 7. In turn, the display 11 is configured to display the mass determined by the data processing unit.

In operation, the user places a fish to be weighed on the support 5 attached to the frame 1. The weight of the fish causes a force to be applied to each of the weight sensors 7 attached to the feet 3 of the frame 1. Each weight sensor 7 transmits mass data related to the mass of the fish to the data processing unit. The data processing unit determines the mass of the fish from the mass data received from all of the weight sensors 7. The mass of the fish determined by the data processing unit is then displayed on the display 11 for the user to read.

In some arrangements of the invention, the receiving unit 9 is integrally attached to the frame 1. In other arrangements of the invention, the receiving unit 9 is not attached to the frame 1 and may be portable.

In arrangements of the invention comprising an integrally attached receiving unit 9, the receiving unit may be connectable to the plurality of weight sensors 7 via a plurality of electrical cables. In such arrangements of the invention, the device may further comprise the plurality of electrical cables. In arrangements of the invention wherein in the receiving unit 9 is connectable to the plurality of weight sensors 7 via a plurality of electrical cables, data communication between the receiving unit and the plurality of weight sensors may occur via the plurality of electrical cables. In other words, each weight sensor 7 may be connected to the receiving unit 9 by an electrical cable and may transmit mass data to the receiving unit in the form of an electrical signal.

In some arrangements of the invention, each weight sensor 7 and the receiving unit 9 both comprise a wireless transceiver. In such arrangements of the invention, each weight sensor 7 may transmit mass data wirelessly to the receiving unit 9, i.e. data communication between the receiving unit and the plurality of weight sensors may occur wirelessly. It can be appreciated that wireless transmission of mass data from the weight sensors 7 to the receiving unit 9 is possible both in arrangements of the invention wherein the receiving unit is integrally attached to the frame 1, and in arrangements of the invention wherein the receiving unit is not attached to the frame.

In preferred arrangements of the invention, the receiving unit 9 comprises at least one actuator 13 manipulable by the user. The at least one actuator 13 may comprise a tare button. The user may reset the mass shown by the display 11 to zero by pressing the tare button.

In some arrangements of the invention, the receiving unit 9 further comprises a data storage unit. The at least one actuator 13 may be manipulable by the user to input the mass of different pieces of fishing equipment, such as fishing nets, for storage by the data storage unit. The at least one actuator 13 may further be manipulable by the user to cause a stored mass of a piece of fishing equipment to be retrieved from the data storage unit and deducted from the mass displayed by the display 11. In other words, if a fish to be weighed is placed on the support 5 along with another piece of fishing equipment, the user is able to manipulate the at least one actuator 13 such that the mass displayed by the display 11 is the accurate mass of the fish to be weighed: the user may manipulate the at least one actuator such that the stored mass of the piece of fishing equipment is deducted from the mass determined by the data processing unit. It can be appreciated that, in such arrangements of the invention, the user is readily able to weigh a fish in a fishing net, for example.

In preferred arrangements of the invention, the at least one actuator 13 comprises an on/off switch.

In some arrangements of the invention, the at least one actuator 13 is manipulable by the user to set or change the unit of mass in which the mass determined by the data processing unit is displayed by the display 11. For example, the at least one actuator 13 may be manipulable by the user to switch the unit of mass in which the mass is displayed by the display 11 between grams and ounces.

In certain arrangements of the invention, the display 11 additionally shows the working status of each connected weight sensor 7 and/or the receiving unit 9. In some arrangements of the invention, the at least one actuator 13 is manipulable by the user to display the working status of each connected weight sensor 7 and/or the receiving unit 9 on the display 11.

In preferred arrangements of the invention, each weight sensor 7 comprises an on/off switch.

In preferred arrangements of the invention, the display 11 is illuminated. It can be appreciated that an illuminated display can be read more easily in poor lighting and bad weather conditions and is therefore advantageous.

In certain arrangements of the invention, the receiving unit 9 comprises at least one LED and/or each weight sensor 7 comprises at least one LED, wherein the at least one LED of the receiving unit indicates the working status of the receiving unit and the at least one LED of each weight sensor indicates the working status of the weight sensor. In preferred arrangements of the invention the at least one LED of the receiving unit and/or each weight sensor is an RGB LED.

In preferred arrangements of the invention, the support 5 is made of a water-resistant fabric. More preferably, the support 5 is made of a waterproof fabric.

The support 5 may comprise a plurality of tabs, wherein each tab comprises at least one fastening such as a press stud or hook-and-loop fastener. The tabs may be used to attach/fasten the support 5 to the frame 1.

In some arrangements of the invention, the support 5 comprises a cover portion. The cover portion may be used to cover a fish supported by the support 5 during weighing. It can be appreciated that the cover portion protects the fish from the environment during weighing.

The cover portion may take a number of forms. In a preferred arrangement of the invention, the cover portion is a flap of material attached to the support 5. The flap of material may be folded over a fish placed on the support 5, to cover the fish.

In alternative arrangements of the invention, the device may comprise a cover attachable to the frame 1. The cover may be used to cover a fish supported by the support 5 during weighing.

In certain advantageous arrangements of the invention, the support 5 comprises at least one aperture 15 for drainage of water from fish placed on the support. The at least one aperture 15 is preferably located on the support 5 such that, when the support is attached to the frame 1, the at least one aperture is located at the base of the support.

In preferred arrangements of the invention, the frame 1 is collapsible. It can be appreciated that a collapsible frame 1 is advantageous: a collapsible frame can be folded into a small space, thereby making it easier to transport.

The weight sensors 7 and receiving unit 9 are battery powered. In preferred arrangements of the invention, both the receiving unit 9 and each weight sensor 7 comprise a rechargeable battery and a charging port for connecting a charger. Additionally, each weight sensor 7 and the receiving unit 9 may comprise a cover portion for covering the charging port when the charging port is not in use. The cover portion prevents water and debris entering the charging port.

It is envisaged that the device may be sold together with a charger for charging the weight sensors 7 and receiving unit 9.

In certain arrangements of the invention, the display 11 additionally shows the battery status (percentage charge of the battery) of each weight sensor 7 connected to the receiving unit 9 and/or the receiving unit. In some arrangements of the invention, the at least one actuator 13 is manipulable by the user to display the battery status of each connected weight sensor 7 and/or the receiving unit 9 on the display 11.

It is envisaged that a plurality of weight sensors 7, as described above, and a receiving unit 9, as also described above, may be sold together as a kit for use with fish cradles already on the market. Such a kit could be used to adapt fish cradles already on the market for weighing fish.

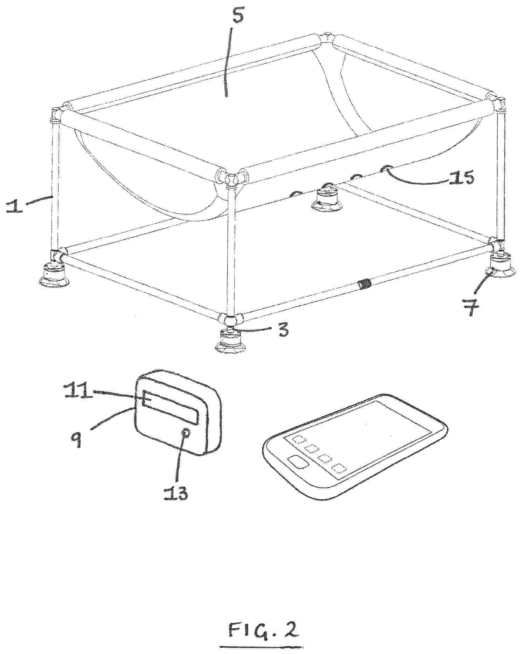

The present invention also relates to a system comprising a device for weighing fish and a computer or a mobile device such as a tablet or mobile phone. A system according to the present invention is depicted in figure 2.

The device for weighing fish may be as described above. In other words, the device for weighing fish may comprise a frame 1, a support 5, a plurality of weight sensors 7 and a receiving unit 9. In such arrangements of the invention, the receiving unit 9 is capable of data communication with the mobile device or computer. The receiving unit 9 is configured to transmit each mass value determined by the data processing unit to the mobile device or computer. The mobile device or computer has or is programmed with instructions to save each mass value transmitted by the receiving unit 9 to a data storage unit of the mobile device or computer.

The receiving unit 9 may be connectable to the mobile device or computer either wirelessly or via an electrical cable. In other words, data communication between the receiving unit 9 and the mobile device or computer may occur via an electrical cable or wirelessly. In arrangements wherein data communication occurs via an electrical cable, the system may further comprise an electrical cable for connecting the receiving unit 9 to the mobile device or computer.

In some arrangements of the invention, the mobile device or computer has or is programmed with instructions to apply a date stamp to each stored mass value. "Stored mass value", as used herein, refers to a mass value saved to the data storage unit of the mobile device or computer. Advantageously, the mobile device or computer has or is programmed with instructions to apply a timestamp to each stored mass value. As used herein, applying a timestamp to a stored mass value refers to tagging the stored mass value with both a time and a date. Applying a date stamp to a stored mass value refers to tagging the stored mass value with a date only.

In alternative arrangements of the invention, the receiving unit 9 is configured to apply a date stamp or timestamp to the mass value determined by the data processing unit. The receiving unit 9 transmits date or timestamped mass values to the mobile device or computer. The mobile device or computer has or is programmed with instructions to save each mass value, together with its date or timestamp, to a data storage unit of the mobile device or computer.

In some arrangements of the invention comprising a GPS enabled mobile device, the mobile device has or is programmed with instructions to geotag each stored mass value.

In alternative arrangements of the invention, the receiving unit 9 is GPS enabled. In such arrangements of the invention, the receiving unit 9 is configured to geotag each mass value determined by the data processing unit. The receiving unit 9 transmits geotagged mass values to the mobile device or computer. The mobile device or computer has or is programmed with instructions to save each mass value, together with its geotag, to a data storage unit of the mobile device or computer.

In certain arrangements of the invention, the receiving unit 9 comprises a data storage unit. The receiving unit 9 is configured to save each mass value determined by the data processing unit to the data storage unit of the receiving unit. If the receiving unit 9 is configured to date or timestamp each mass value and/or geotag each mass value, each mass value is saved to the data storage unit of the receiving unit together with its date or timestamp and/or geotag. In such arrangements of the invention, the mobile device or computer has or is programmed with instructions to retrieve any mass values not saved to the data storage unit of the mobile device or computer from the data storage unit of the receiving unit 9 and save such mass values, together with their date or timestamps and/or geotags if present, to the data storage unit of the mobile device or computer. If the user does not connect the mobile device or computer to the receiving unit 9 during weighing, the mobile device or computer retrieves any mass values determined by the data processing unit during weighing once connected to the receiving unit 9.

It can be appreciated that arrangements of the invention wherein the receiving unit 9 comprises a data storage unit are advantageous. The user need not connect the mobile device or computer to the receiving unit 9 while weighing fish. The mass of each fish caught during a particular fishing session can be retrieved by the mobile device or computer from the data storage unit of the receiving unit 9 at a later time point. This arrangement is particularly advantageous for systems comprising a computer, because computers are less easily transported to the site of fishing.

It can also be appreciated that arrangements of the invention, wherein the receiving unit 9 is configured to date stamp/ timestamp and/or geotag the mass values, are advantageous. Each mass value is then accurately date stamped/ timestamped and/or geotagged. It does not matter whether the mass value is transmitted to the mobile device or computer at the time of weighing or at a later time point.

The mobile device or computer comprises a display. The mobile device or computer also comprises at least one input device. For example, the mobile device comprises a touchscreen and/or a keypad, and the computer comprises a keyboard and a touchpad or a mouse.

The mobile device or computer has or is programmed with instructions to retrieve one or more stored mass values from the data storage unit of the computer or mobile device, and display said one or more mass values on the display of the mobile device or computer, upon the user inputting a retrieval command using the at least one input device. In some arrangements of the invention wherein the stored mass values are date or timestamped and/or geotagged, the mobile device or computer may have or be programmed with instructions to additionally display the date or timestamp and/or geotag of each of the one or more mass values, upon the user inputting a retrieval command.

It can be appreciated that the user is able to keep a record of the mass of each fish that they have caught using the present system. In arrangements wherein the mass values are date or timestamped and/or geotagged, the user is also able to keep a record of when and/or where different mass fish were caught.

The system may further comprise a camera connectable either wirelessly or via an electrical cable to the mobile device or computer. The user may use the camera to take photos of fish they have caught. If the user is using a fishing line and fish bite detector setup, the user may also use the camera to record videos of the "runs" on their fishing line.

In systems comprising a camera, the camera is configured to transmit photos or videos to the mobile device or computer when connected. The mobile device or computer has or is programmed with instructions to save photos and videos transmitted by the camera to a data storage unit of the mobile device or computer.

It can be appreciated that, in arrangements of the invention comprising a mobile device, the mobile device may comprise a camera. In such arrangements, the user may use the camera of the mobile device to take photos of fish they have caught or record videos of their "runs". These photos and "run" videos will automatically be saved to the data storage unit of the mobile device.

The user may weigh a fish that they have caught using the device for weighing fish and use the camera/mobile device to take a photo of said fish and/or record a video of the "run" for said fish.

In arrangements of the invention comprising a camera or a mobile device having a camera, the mobile device or computer has or is programmed with instructions to pair a stored photo and/or video with a stored mass value, both from the data storage unit of the mobile device or computer, upon the user inputting a pairing command using the at least one input device. In other words, the user can pair up the photo and/or "run" video for a fish they have caught with the mass value of said fish, such that both the photo and/or "run" video and mass value are saved together in the data storage unit of the mobile device or computer.

In some arrangements of the invention, the camera is configured to date or timestamp and/or geotag photos and videos. The camera is configured to transmit photos and videos to the mobile device or computer together with their date or timestamp and/or geotag. The mobile device or computer has or is programmed with instructions to save each photo or video transmitted by the camera, together with its date or timestamp and/or geotag, to a data storage unit of the mobile device or computer. The stored mass values may be date or timestamped and/or geotagged. The mobile device or computer may have or be programmed with instructions to automatically pair stored mass values with stored photos and/or "run" videos based on the date or timestamps and/or geotags of the stored mass values and photos and/or run videos.

Similarly, in arrangements of the invention comprising a mobile device having a camera, the mobile device may have of be programmed with instructions to automatically pair photos or videos taken with the mobile device with stored mass values based on date or timestamps and/or geotags of the photos and/or videos and stored mass values.

In arrangements of the invention comprising a camera or a mobile device having a camera, the mobile device or computer has or is programmed with instructions to display, on the display of the mobile device or computer, the mass value and the paired photo and/or a link to the paired "run" video for one or more mass values, upon the user inputting a retrieval command using the at least one input device.

The instructions carried out by the mobile device or computer upon the input of a retrieval command may be editable. In arrangements wherein the instructions are editable, the user may edit the instructions using the at least one input device, to select which information for the one or more mass values is displayed on the display of the mobile device or computer upon input of a retrieval command. For example, the user may select to only display the mass value. Alternatively, the user may select to display the mass value and the paired photo, or the mass value and a link to the paired video, or the mass value and both the paired photo and a link to the paired video. In arrangements of the invention wherein the stored mass values are date or timestamped and/or geotagged, the user may select whether to display the date or timestamp and/or geotag. The user may also select whether to display the exact coordinates from the geotag, or simply display the country, region, city, or any combination thereof, from the geotag.

In some arrangements of the invention, the mobile device or computer has or is programmed with instructions to create a user account for the user. The user may access the user account using the at least one input device. In such arrangements of the invention, the user may only be able to input retrieval and pairing commands, and edit the instructions carried out by the mobile device or computer upon the input of a retrieval command, after accessing the user account.

Each user of a system of the present invention may have their own user account. The mobile device or computer of the system of the present invention may have or be programmed with instructions to share data, such as stored mass values, with one or more other user accounts, upon the user inputting a sharing command using the at least one input device. The instructions may be editable such that the user may select with which user account or accounts to share data, and what data to share, e.g. just a mass value, a mass value and a location, a picture and a mass value, etc.

Any mobile device or computer may be used in the present system. In other words, a mobile device or computer already owned by the user may be used in the present system. To be able to use their mobile device or computer in the present system, the user may simply download, onto their mobile device or computer, the above described instructions. The instructions may be in the form of application software (i.e. in the form of an app).

It can be appreciated that the system need not necessarily comprise a device for weighing fish, wherein the device for weighing fish comprises a frame 1, a support 5, a plurality of weight sensors 7 and a receiving unit 9. Alternative devices for weighing fish may be used in the present system. For example, the system may comprise a hanging scale.

In arrangements of the invention not comprising a device for weighing fish having a receiving unit 9, the device itself may be capable of wireless data communication with the mobile device or computer. The device may be configured to transmit each mass value measured by the device to the mobile device or computer. The device may be configured to date or timestamp and/or geotag each mass value measured by the device. The device may also comprise a data storage unit for saving each mass value measured by the device. In other words, the device for weighing fish may comprise all of the functionalities disclosed above for a receiving unit 9 of the system of the invention.

When used in this specification and claims, the terms "comprises" and "comprising" and variations thereof mean that the specified features, steps or integers are included. The terms are not to be interpreted to exclude the presence of other features, steps or components.

## Claims

1. A device for weighing fish comprising:
a frame (1) comprising a plurality of feet (3);
a support (5) for supporting a fish to be weighed, wherein the support is attachable to the frame, wherein when the support is attached to the frame, the support forms a hammock on which a fish may be placed for weighing;
a plurality of weight sensors (7), wherein the number of weight sensors is equal to the number of frame feet; and
a receiving unit (9) comprising a data processing unit and a display (11), wherein the receiving unit is capable of data communication with the plurality of weight sensors,
wherein each weight sensor is configured to transmit mass data to the receiving unit, wherein the data processing unit is programmed to determine a mass from the mass data received from the plurality of weight sensors, and wherein the display is configured to display the mass determined by the data processing unit, **characterised in that** each weight sensor is integrally attached to one of the plurality of feet.

2. The device of claim 1, wherein the receiving unit (9) is integrally attached to the frame (1), wherein the receiving unit is connectable to the plurality of weight sensors (7) via a plurality of electrical cables, and wherein the device further comprises said plurality of electrical cables.

3. The device of claim 1, wherein the receiving unit (9) is integrally attached to the frame (1) or is portable, wherein each weight sensor (7) and the receiving unit both comprise a wireless transceiver, and wherein each weight sensor transmits data wirelessly to the receiving unit.

4. The device of any preceding claim, wherein the receiving unit (9) comprises at least one actuator (13) manipulable by the user, wherein the at least one actuator comprises a tare button.

5. The device of claim 4, wherein the at least one actuator (13) is manipulable to set or change the unit of mass in which the mass determined by the data processing unit is displayed.

6. The device of any preceding claim, wherein each weight sensor (7) comprises at least one LED to indicate the working status of the weight sensor, and/or wherein the receiving unit comprises at least one LED to indicate the working status of the receiving unit.

7. The device of any preceding claim comprising four feet (3) and four weight sensors (7).

8. The device of any preceding claim, wherein the support (5) comprises a cover portion for covering a fish to be weighed, or wherein the device further comprises a cover attachable to the frame (1) for covering a fish to be weighed.

9. A system comprising:
the device of any of claims 1-8; and
a mobile device or a computer,
wherein the receiving unit (9) is capable of data communication with the mobile device or computer, wherein the receiving unit is configured to transmit each mass value determined by the data processing unit to the mobile device or computer,
wherein the mobile device or computer has or is programmed with instructions to save each mass value transmitted by the receiving unit to a data storage unit of the mobile device or computer, and
wherein the mobile device or computer has or is programmed with instructions to retrieve one or more saved mass values from the data storage unit of the mobile device or computer and display the one or more saved mass values on a display of the mobile device or computer upon input of a retrieval command by the user.

10. The system of claim 9 further comprising:
a camera capable of data communication with the mobile device or computer, wherein the camera is configured to transmit photos or videos to the mobile device or computer,
wherein the mobile device or computer has or is programmed with instructions to save photos and videos transmitted by the camera to a data storage unit of the mobile device or computer,
wherein the mobile device or computer has or is programmed with instructions to pair a saved photo and/or video with a saved mass value upon input of a pairing command by the user, and
wherein the mobile device or computer has or is programmed with instructions to retrieve one or more saved mass values and paired photos and/or videos from the data storage unit of the mobile device or computer and display the one or more saved mass values on a display of the mobile device or computer upon input of a retrieval command by the user.

11. The system of claim 9 comprising a mobile device, wherein the mobile device comprises a camera,
wherein the mobile device has or is programmed with instructions to pair a photo and/or video saved to a data storage unit of the mobile device with a saved mass value upon input of a pairing command by the user, and
wherein the mobile device has or is programmed with instructions to retrieve one or more saved mass values and paired photos and/or videos from the data storage unit of the mobile device and display the one or more saved mass values and paired photos and/or videos on a display of the mobile device upon input of a retrieval command by the user.

## Patentansprüche

1. Vorrichtung zum Wiegen von Fischen, umfassend:
einen Rahmen (1), der eine Mehrzahl von Füßen (3) umfasst;
eine Halterung (5) zum Halten eines zu wiegenden Fisches, wobei die Halterung am Rahmen befestigt werden kann, wobei die Halterung, wenn sie am Rahmen befestigt ist, eine Hängematte bildet, auf die ein Fisch zum Wiegen gelegt werden kann;
eine Mehrzahl von Gewichtssensoren (7), wobei die Anzahl der Gewichtssensoren gleich der Anzahl der Rahmenfüße ist;
und
eine Empfangseinheit (9), die eine Datenverarbeitungseinheit und eine Anzeige (11) umfasst, wobei die Empfangseinheit zur Datenkommunikation mit der Mehrzahl von Gewichtssensoren fähig ist,
wobei jeder Gewichtssensor dazu konfiguriert ist, Massedaten an die Empfangseinheit zu übertragen, wobei die Datenverarbeitungseinheit dazu programmiert ist, aus den von der Mehrzahl von Gewichtssensoren empfangenen Massedaten eine Masse zu bestimmen, und wobei die Anzeige dazu konfiguriert ist, die von der Datenverarbeitungseinheit bestimmte Masse anzuzeigen, **dadurch gekennzeichnet, dass** jeder Gewichtssensor einstückig an einem der Mehrzahl von Füßen befestigt ist.

2. Vorrichtung nach Anspruch 1, wobei die Aufnahmeeinheit (9) einstückig am Rahmen (1) befestigt ist, wobei die Empfangseinheit mit der Mehrzahl von Gewichtssensoren (7) über eine Mehrzahl von elektrischen Kabeln verbunden werden kann, und wobei die Vorrichtung ferner die Mehrzahl von elektrischen Kabeln umfasst.

3. Vorrichtung nach Anspruch 1, wobei die Empfangseinheit (9) einstückig an dem Rahmen (1) befestigt oder tragbar ist, wobei jeder Gewichtssensor (7) und die Empfangseinheit jeweils einen drahtlosen Transceiver umfassen und wobei jeder Gewichtssensor Daten drahtlos an die Empfangseinheit überträgt.

4. Vorrichtung nach einem der vorhergehenden Ansprüche, wobei die Empfangseinheit (9) mindestens einen Aktuator (13) umfasst, der von dem Benutzer gehandhabt werden kann, wobei der mindestens eine Aktuator eine Tarataste umfasst.

5. Vorrichtung nach Anspruch 4, wobei der mindestens eine Aktuator (13) gehandhabt werden kann, um die Einheit der Masse, in der die von der Datenverarbeitungseinheit ermittelte Masse angezeigt wird, einzustellen oder zu ändern.

6. Vorrichtung nach einem der vorhergehenden Ansprüche, wobei jeder Gewichtssensor (7) mindestens eine LED umfasst, um den Arbeitsstatus des Gewichtssensors anzuzeigen, und/oder wobei die Empfangseinheit mindestens eine LED umfasst, um den Arbeitsstatus der Empfangseinheit anzuzeigen.

7. Vorrichtung nach einem der vorhergehenden Ansprüche, die vier Füße (3) und vier Gewichtssensoren (7) umfasst.

8. Vorrichtung nach einem der vorhergehenden Ansprüche, wobei die Halterung (5) einen Abdeckungsabschnitt zum Abdecken eines zu wiegenden Fisches umfasst, oder wobei die Vorrichtung ferner eine Abdeckung umfasst, die an dem Rahmen (1) zum Abdecken eines zu wiegenden Fisches befestigt werden kann.

9. System, umfassend:
die Vorrichtung nach einem der Ansprüche 1-8; und
ein Mobilgerät oder einen Computer,
wobei die Empfangseinheit (9) zur Datenkommunikation mit dem Mobilgerät oder dem Computer fähig ist, wobei die Empfangseinheit dazu konfiguriert ist, jeden von der Datenverarbeitungseinheit ermittelten Massewert an das Mobilgerät oder den Computer zu übermitteln,
wobei das Mobilgerät oder der Computer über Anweisungen verfügt oder damit programmiert ist, jeden von der Empfangseinheit übertragenen Massewert in einer Datenspeichereinheit des Mobilgeräts oder Computers zu speichern, und
wobei das Mobilgerät oder der Computer über Anweisungen verfügt oder damit programmiert ist, um einen oder mehrere gespeicherte Massewerte aus der Datenspeichereinheit des Mobilgeräts oder Computers abzurufen und bei Eingabe eines Abrufbefehls durch den Benutzer den einen oder die mehreren gespeicherten Massewerte auf einer Anzeige des Mobilgeräts oder Computers anzuzeigen.

10. System nach Anspruch 9, ferner umfassend:
eine Kamera, die zur Datenkommunikation mit dem Mobilgerät oder Computer fähig ist, wobei die Kamera dazu konfiguriert ist, Fotos oder Videos an das Mobilgerät oder den Computer zu übertragen,
wobei das Mobilgerät oder der Computer über Anweisungen verfügt oder damit programmiert ist, um die von der Kamera übertragenen Fotos und Videos in einer Datenspeichereinheit des Mobilgeräts oder Computers zu speichern,
wobei das Mobilgerät oder der Computer über Anweisungen verfügt oder damit programmiert ist, um bei Eingabe eines Kopplungsbefehls durch den Benutzer ein gespeichertes Foto und/oder Video mit einem gespeicherten Massewert zu koppeln, und
wobei das Mobilgerät oder der Computer über Anweisungen verfügt oder damit Anweisungen programmiert ist, um einen oder mehrere gespeicherte Massewerte und gekoppelte Fotos und/oder Videos aus der Datenspeichereinheit des Mobilgeräts oder Computers abzurufen und den einen oder die mehreren gespeicherten Massewerte bei Eingabe eines Abrufbefehls durch den Benutzer auf einer Anzeige des Mobilgeräts oder Computers anzuzeigen.

11. System nach Anspruch 9, das ein Mobilgerät umfasst, wobei das Mobilgerät eine Kamera umfasst,
wobei das Mobilgerät über Anweisungen verfügt oder damit programmiert ist, um bei Eingabe eines Kopplungsbefehls durch den Benutzer ein in einer Datenspeichereinheit des Mobilgeräts gespeichertes Foto und/oder Video mit einem gespeicherten Massewert zu koppeln, und
wobei das Mobilgerät über Anweisungen verfügt oder damit programmiert ist, um einen oder mehrere gespeicherte Massenwerte und gepaarte Fotos und/oder Videos aus der Datenspeichereinheit des Mobilgeräts abzurufen und bei Eingabe eines Abrufbefehls durch den Benutzer den einen oder die mehreren gespeicherten Massewerte und gepaarten Fotos und/oder Videos auf einer Anzeige des Mobilgeräts anzuzeigen.

## Revendications

1. Dispositif pour peser des poissons, comprenant :
un châssis (1) comprenant une pluralité de pieds (3) ;
un support (5) pour supporter un poisson à peser, le support pouvant être fixé au châssis ; lorsque le support est fixé au châssis, le support formant un hamac sur lequel un poisson peut être placé pour être pesé ;
une pluralité de capteurs de poids (7), le nombre de capteurs de poids étant égal au nombre de pieds du châssis ;
et
une unité de réception (9) comprenant une unité de traitement de données et un écran (11), l'unité de réception étant capable de communiquer des données avec la pluralité de capteurs de poids,
chaque capteur de poids étant configuré pour transmettre des données de masse à l'unité de réception, l'unité de traitement de données étant programmée pour déterminer une masse à partir des données de masse reçues de la pluralité de capteurs de poids, et l'écran étant configuré pour afficher la masse déterminée par l'unité de traitement de données, **caractérisé en ce que** chaque capteur de poids est fixé de manière intégrale à l'un des pieds de la pluralité de pieds.

2. Dispositif selon la revendication 1, l'unité de réception (9) étant fixée de manière intégrale au châssis (1), l'unité de réception pouvant être connectée à la pluralité de capteurs de poids (7) via une pluralité de câbles électriques, et le dispositif comprenant en outre ladite pluralité de câbles électriques.

3. Dispositif selon la revendication 1, l'unité de réception (9) étant fixée de manière intégrale au châssis (1) ou étant portable, chaque capteur de poids (7) et l'unité de réception comprenant tous deux un émetteur-récepteur sans fil, et chaque capteur de poids transmettant des données sans fil à l'unité de réception.

4. Dispositif selon l'une quelconque des revendications précédentes, l'unité de réception (9) comprenant au moins un actionneur (13) manipulable par l'utilisateur, l'au moins un actionneur comprenant un bouton de tare.

5. Dispositif selon la revendication 4, l'au moins un actionneur (13) pouvant être manipulé pour régler ou modifier l'unité de masse dans laquelle la masse déterminée par l'unité de traitement de données est affichée.

6. Dispositif selon l'une quelconque des revendications précédentes, chaque capteur de poids (7) comprenant au moins une LED pour indiquer l'état de fonctionnement du capteur de poids, et/ou l'unité de réception comprenant au moins une LED pour indiquer l'état de fonctionnement de l'unité de réception.

7. Dispositif selon l'une quelconque des revendications précédentes, comprenant quatre pieds (3) et quatre capteurs de poids (7).

8. Dispositif selon l'une quelconque des revendications précédentes, le support (5) comprenant une partie de couverture pour recouvrir un poisson à peser, ou le dispositif comprenant en outre une couverture pouvant être fixée au cadre (1) pour recouvrir un poisson à peser.

9. Système comprenant :
le dispositif selon l'une quelconque des revendications 1 à 8 ; et
un dispositif mobile ou un ordinateur,
l'unité de réception (9) étant capable de communiquer des données avec le dispositif mobile ou l'ordinateur, l'unité de réception étant configurée pour transmettre chaque valeur de masse déterminée par l'unité de traitement de données au dispositif mobile ou à l'ordinateur,
le dispositif mobile ou l'ordinateur comportant ou étant programmé avec des instructions pour enregistrer chaque valeur de masse transmise par l'unité de réception dans une unité de stockage de données du dispositif mobile ou de l'ordinateur, et
le dispositif mobile ou l'ordinateur comportant ou étant programmé avec des instructions pour récupérer une ou plusieurs valeurs de masse enregistrées dans l'unité de stockage de données du dispositif mobile ou de l'ordinateur et afficher les une ou plusieurs valeurs de masse enregistrées sur un écran du dispositif mobile ou de l'ordinateur lors de la saisie d'une commande de récupération par l'utilisateur.

10. Système selon la revendication 9, comprenant en outre :
une caméra capable de communiquer des données avec le dispositif mobile ou l'ordinateur, la caméra étant configurée pour transmettre des photos ou des vidéos au dispositif mobile ou à l'ordinateur,
le dispositif mobile ou l'ordinateur comportant ou étant programmé avec des instructions pour enregistrer les photos et les vidéos transmises par la caméra dans une unité de stockage de données du dispositif mobile ou de l'ordinateur,
le dispositif mobile ou l'ordinateur comportant ou étant programmé avec des instructions pour associer une photo et/ou une vidéo enregistrée à une valeur de masse enregistrée lors de la saisie d'une commande d'association par l'utilisateur, et
le dispositif mobile ou l'ordinateur comportant ou étant programmé avec des instructions pour récupérer une ou plusieurs valeurs de masse enregistrées et des photos et/ou vidéos associées à partir de l'unité de stockage de données du dispositif mobile ou de l'ordinateur et afficher les une ou plusieurs valeurs de masse enregistrées sur un écran du dispositif mobile ou de l'ordinateur lors de la saisie d'une commande de récupération par l'utilisateur.

11. Système selon la revendication 9, comprenant un dispositif mobile, le dispositif mobile comprenant une caméra,
le dispositif mobile comportant ou étant programmé avec des instructions pour associer une photo et/ou une vidéo enregistrée dans une unité de stockage de données du dispositif mobile à une valeur de masse enregistrée lors de la saisie d'une commande d'association par l'utilisateur, et
le dispositif mobile comportant ou étant programmé avec des instructions pour récupérer une ou plusieurs valeurs de masse enregistrées et des photos et/ou vidéos associées à partir de l'unité de stockage de données du dispositif mobile et afficher les une ou plusieurs valeurs de masse enregistrées et des photos et/ou vidéos associées sur un écran du dispositif mobile lors de la saisie d'une commande de récupération par l'utilisateur.
